Europäisches Patentamt

(19) European Patent Office

Office européen des brevets

(11) Publication number: **0 037 730**
**B1**

(12) **EUROPEAN PATENT SPECIFICATION**

(45) Date of publication of patent specification: **11.09.85**

(51) Int. Cl.⁴: **B 01 D 13/04** // B01D13/00

(21) Application number: **81301480.0**

(22) Date of filing: **06.04.81**

(54) Asymmetric ultrafiltration membrane and production thereof.

(30) Priority: **08.04.80 US 138315**

(43) Date of publication of application:
**14.10.81 Bulletin 81/41**

(45) Publication of the grant of the patent:
**11.09.85 Bulletin 85/37**

(84) Designated Contracting States:
**DE FR GB IT SE**

(56) References cited:
**EP-A-0 036 315**
**DE-A-2 850 043**
**FR-A-2 225 481**
**FR-A-2 435 276**
**GB-A-1 212 758**
**US-A-3 720 607**
**US-A-4 159 251**

(73) Proprietor: **BRUNSWICK CORPORATION**
**One Brunswick Plaza**
**Skokie Illinois 60077 (US)**

(72) Inventor: **Wrasidlo, Wolfgang J.**
**Brunswick Technetics 4116 Sorrento Valley**
**San Diego California 92121 (US)**

(74) Representative: **Spencer, Graham Easdale et al**
**A.A. Thornton & Co Northumberland House**
**303-306, High Holborn**
**London WC1V 7LE (GB)**

Courier Press, Leamington Spa, England.

## Description

The present invention is concerned with ultrafiltration membranes and the production thereof.

Polymeric membranes are generally categorized according to the size of particles which they retain or according to their pore size as either ultrafiltration membranes, which have the finest pores, or microporous (microfiltration) membranes which have coarser pores. The dividing line between ultrafiltration membranes and microfiltration membranes is at approximately a pore size of 50 millimicrons (this corresponds to the size of the smallest retained particle).

Membranes may also be categorized as symmetrical, when the two faces have similar porosity, or as asymmetric, when the two faces differ in porosity.

An important characteristic of a membrane is its permeability to water which is customarily expressed in units of cm/min at one psi (6.9 kPa) which represents the macroscopic velocity in cm/min at which water flows through the membrane when the driving pressure is one psi (6.9 kPa). This permeability may be measured by the volume of pure water which passes through a unit area of membrane per unit time.

The flow of water through the membrane is, within wide limits, directly proportional to the applied pressure. In general, the permeability to water decreases as the retentivity of the membrane to solutes increases, because smaller pores offer more resistance to flow. This relationship, however, is not a simple one since the retentivity depends on the single smallest pore encountered by the liquid in passing the membrane, whereas the resistance to flow depends on the cumulative effect of all the pores through which the sample must pass. Hence, membranes of similar solute retention having uniform pores throughout their entire thickness have lower permeabilities than those whose retentivity is due to a thin skin having the same pore sizes combined with a body or substrate of much larger pores. In other words, symmetrical membranes offer more resistance to fluid flow and therefore have slower flow rates compared to asymmetric membranes of similar retentivity.

In addition to their retention characteristics, membranes may be characterised by their ability to resist plugging or their dirt-holding capacity. Plugging refers to the reduction of the filtration rate during filtering as a function of the amount of liquid passing the membrane. In order to extend the lifetime of a membrane in a given filtration operation, it is customary to prefilter the fluid through a membrane or filter having higher flow rates and smaller retentivities, but still the ability to reduce severe fouling, or blocking of the final membrane filter.

Structurally, membranes vary greatly and may generally be classified as either reticulated or granular. In the former, there is a three-dimensional open network of interconnecting fibrous strands and open interstitial flow channels. In the granular type structure, however, incompletely coalesced solid particles called granules leave an interconnected network of pores between them. Reticulated membranes generally having a higher porosity than granular membranes. (The porosity of membranes is defined as "1—the relative density", or as the ratio of the weight of a given volume of membrane to that of the bulk polymer forming the membrane).

Polymeric membranes are generally made by preparing a solution of the polymer in a suitable solvent, forming the solution into a thin sheet, a hollow tube or a hollow fibre, and then precipitating the polymer under controlled conditions. Precipitation may be carried out by solvent evaporation or by contacting the polymer solution with a non-solvent.

U.S. Patent 3,615,024 discloses a method of forming porous polymeric membranes which are described as being highly asymmetric. The membranes produced according to that method are only slightly asymmetric, however, and have a permeability to water which is only slightly higher than that of symmetrical membranes of the same retentivity.

Membranes may also be categorized as either composite, supported or integral. Composite membranes comprise a very thin retentive layer attached to a preformed porous support; while in a supported membrane, the actual membrane is attached to a strong sheet material of negligible retentivity. Integral membranes are formed in one and the same operation and have layers of the same composition, which layers may have very different properties, depending, in general, on whether the membrane is symmetrical or asymmetric.

There is a continual demand for improved, highly asymmetric, integral ultrafiltration membranes having improved retention properties and enhanced flow rates; according to the invention, therefore, there is provided an asymmetric ultrafiltration membrane having a water permeability of at least 0.2 cm/min at one psi (6.9 kPa), the membrane comprising an open honeycomb structure constituting the majority of the membrane and, integral therewith, a skin, the open honeycomb structure and the skin both being of a polymeric material having a glass transition temperature of at least 200°C, said polymeric material not being a polyquinoxaline, a polyquinoline, a poly-as-triazine, a polypyrazinoquinoxaline or a polyanthrazoline.

The present invention also comprises a method of producing such a membrane, which comprises casting a solution containing not more than 13% by weight of the polymeric material into a quench liquid which is a non-solvent for the polymeric material but miscible with the solvent.

The polymeric material used to form the membrane may be any polymer which has a glass transition temperature of at least 200°C and which may form a membrane. Some polymers, due to poor strength, may not even be used to form membranes. Other polymers, such as polyethylene, lack the rigidity necessary to form honeycomb structures with thin skins. Polyethylene has a modulus of elasticity of about $6.9 \times 10^4$ kPa, which is insufficient; the polymeric material used in the membrane according to the invention preferably has a modulus of elasticity of at least about $6.9 \times 10^5$, typically at least about $3.5 \times 10^6$ and preferably from about $6.9 \times 10^6$ to about $3.5 \times 10^7$ kPa. Rigid polymers generally have relatively high glass transition temperatures and moduli of elasticity.

The glass transition temperature or "$T_g$" is that temperature at which a polymer tends to become brittle when cooled and viscoelastic when heated. It also corresponds to a change in the temperature expansion coefficient, the temperature expansion coefficient being larger above $T_g$ than it is below $T_g$.

Glass transition temperatures also correspond to freedom of molecular motion which is greater above $T_g$ than it is below $T_g$. Though the exact determination of the glass transition temperature depends somewhat on the method used and on the rate of the determination, it is, within 5 to 10°C, a well-accepted characteristic of a polymer. The presence of solvents or plasticizers generally lowers the glass transition temperature of a polymer so that it stays viscoelastic at temperatures at which it may be glassy when pure.

The polymeric material for use according to the present invention must have a glass transition temperature of at least 200°C, typically at least about 250°C, and preferably from 300°C to 400°C. It has been found that polysulphones, which generally have a glass transition temperature of about 175°C, are insufficiently rigid. Polyvinyl carbazole, on the other hand, which has a glass transition temperature of 200°C, is satisfactory. Examples of polymers which are useful in the present invention are listed in the following Table I:

TABLE I

| Polymer | Glass transition temperature (°C) |
|---|---|
| Polyvinyl carbazole | ∿200°C |
| Poly[4,4'-isopropylidene-bis(3,5-dichlorophenylene)carbonate] | 220°C |
| Poly(phenolphthalein carbonate) | 240°C |
| Poly[piperazine 4,4'-(2,2-butylidene) dibenzamide] | 219 to 232°C |
| Poly(4,4'-isopropylidenediphenylene 4,4'-(2,2-butylidene)dibenzoate) | 204 to 210°C |
| Poly(N-methylphenolphthalimidine isophthalate) (Poly[N-methyl-3,3-bis(4-phenyl) isooxindole isophthalate)] | 28.5°C |
| Poly(phenolisatin isophthalate) (Poly[3,3-bis(4-phenyl)oxindole isophthalate]) | 256°C |
| Poly(phenol-5,7-dichloroisatin isophthalate) [Poly(5,7-dichloro-3,3-bis(4-phenyl) oxindole isophthalate)] | 270°C |
| Poly(phenolphthalein 5-tert-butylisophthalate) | 279°C |
| Poly(phenolphthalein 5-chloroisophthalate) | 313°C |
| Poly(phenolphthalein isophthalate) | 318°C |
| Poly(phenolphthalimidine isophthalate) (Poly[3,3-bis(4-phenyl)isooxindole isophthalate]) | 325°C |
| Poly(phenolphthalimidine terephthalate) (Poly[3,3-bis(4-phenyl)isooxindole terephthalate]) | 327°C |
| Poly[4,4'-phenylmethylenediphenylene terephthalate] | 200°C |
| Poly[2,2'-(2,2'-diphenylene)-5,5'-dibenzimidazole] | 390°C |

Particular types of polymer useful in the present invention are polybenzimidazoles, polyoxadiazoles, polyarylhydrazides, polyarylamides, and polyimides. Particularly preferred such polymers are polyimides because of the high flow rates which may be obtained with these polymers, because of the excellent solubility of these polymers in various solvents, and for reasons of economy and convenience: a particularly preferred polymer for reasons of convenience and economy is Ciba-Geigy XU-218 polyimide which has a glass transition temperature of between 320 and 330°C.

Mixtures of two or more polymers may also be employed.

In order to produce a membrane in the method according to the invention, the polymeric material is dissolved in a solvent, which may be any liquid which dissolves the polymer and is miscible with the quench liquid as described below. The particular solvent chosen will, of course, depend upon the particular polymer and quench liquid used, but an appropriate choice of solvent for each particular polymer/solvent/ quench liquid system will be clear to those skilled in this art. Suitable solvents include cresols, such as metacresol, chloroform, mixtures of chloroform and metacresol, dimethylformamide, dimethylacetamide and N-methyl-pyrrolidone. Mixtures of two or more solvents may also be employed.

The solvent must be such as to produce a stable solution but the stability of the solution must be such that it is destroyed by the addition of a relatively small amount of a miscible non-solvent quench liquid such as isopropyl alcohol or acetone. The amount of miscible non-solvent which may be added to destroy the stability of the polymer solution is preferably less than 10, typically less than about 7, and preferably less than about 5% by weight of the casting dope.

The concentration of polymer in the solvent should be low, much lower than that used in conventional casting processes and is less than 13% by weight. The preferred concentration will depend on the nature of the polymer but the concentration is generally less than 10%, more preferably from 3 to 7% by weight of the solution. At polymer concentrations substantially in excess of 13% by weight, the polymer solutions, when quenched, form granular structures rather than the honeycombed structures of the present invention prepared by these nucleation and growth processes. At polymer concentrations substantially less than 3% by weight, there may be insufficient polymer available to form a coherent membrane.

The quench liquid may be any liquid which is a non-solvent for the polymer and which is miscible with the solvent, and which is such that when the solvent described above contacts the quench liquid, the polymer substantially immediately precipitates as a solid membrane.

Particular quench liquids which may be used for a particular polymer/solvent/quench liquid system vary depending upon the system but an appropriate choice of such a quench liquid will be clear to those skilled in this art. Suitable quench liquids include water, lower alcohols such as isopropyl alcohol, lower ketones such as acetone, and lower aliphatic esters such as ethyl acetate. Water is a particularly preferred quench liquid for reasons of economy and convenience. Mixtures of two or more quench liquids may also be used.

The method according to the invention may be carried out in a continuous, semi-continuous or batch method, as desired, and at any suitable temperature, but substantially ambient temperatures are preferred. This process may also be carried out at atmospheric, sub-atmospheric, or super atmospheric pressures, although substantially atmospheric pressures are preferred.

The membranes formed by the method according to the invention are asymmetric ultrafiltration membranes. The pores of the skin of these ultrafiltration membranes are substantially uniform in size and are generally from 0.5 to 50, typically from 1 to 30, most preferably from 3 to 20 millimicrons in diameter.

The membranes of the present invention have a water permeability of at least about 0.2 cm/min at one psi (6.9 kPa), preferably at least about 0.4 cm/min at one psi (6.9 kPa), more preferably from about 0.4 to about 1.0 cm/min at one psi (6.9 kPa). Water permeability depends, of course, on pore size; with membranes which have a molecular weight cut-off of about 10,000, the water permeability may be from 0.2 to 0.5 cm/min at one psi (6.9 kPa), while with membranes which have a molecular weight cut-off of about 100,000, the water permeability may be from 2 to 3 cm/min at one psi (6.9 kPa). With membranes which have molecular weight cut-off of about one million, the water permeability may be from 5 to 8 cm/min at one psi (6.9 kPa).

The membranes of this invention are particularly advantageous in that they have a high water permeability relative to their retentivity. Thus, membranes of the present invention which have a molecular weight cut-off of 10,000, i.e., those membranes which will retain molecules which have a molecular weight greater than or equal to 10,000 while allowing smaller molecules to pass through, have typically a water permeability of 0.5 cm/min at one psi (6.9 kPa). This is about 20 times higher than the best commercially available ultrafilters having the same molecular weight cut-off.

One way of expressing this relationship between water permeability and molecular weight cut-off is by the ratio of the water permeability (expressed in cm/min at one psi (6.9 kPa)) to the molecular weight cut-off. For membranes of the present invention, this ratio is generally greater than $0.4 \times 10^{-5}$, typically greater than $2 \times 10^{-5}$, more preferably from $2 \times 10^{-5}$ to $3 \times 10^{-5}$ cm/min at one psi (6.9 kPa).

Another way of expressing the relationship between water permeability and molecular weight cut-off is by the ratio of the water permeability (expressed in cm/min at one psi (6.9 kPa)) to the square root of the molecular weight cut-off. For membranes of the present invention, this ratio is generally greater than $2 \times 10^{-3}$, typically greater than $4 \times 10^{-3}$, more preferably from $5 \times 10^{-3}$ to $9 \times 10^{-3}$ cm/min at one psi (6.9 kPa).

In the following description, reference will be made to the accompanying drawings, in which:

Figure 1 is a Scanning Electron Micrograph (SEM) of the surface skin of a membrane according to the invention magnified 100,000 times;

Figure 2 is an SEM of the surface skin of a prior art membrane magnified 100,000 times;

Figure 3 is an SEM of a cross-section of a membrane according to the present invention magnified 1,000 times; this Figure illustrates the tubular structure of the honeycomb structure of the membrane;

Figure 4 is an SEM of a cross-section of a membrane according to the present invention magnified 1,000 times and illustrates the periodic increase in tubular hollow columns with distance from the skin;

Figure 5 is an SEM of the bottom surface of a membrane according to the present invention magnified 2,000 times;

Figure 6 is an SEM of a cross-section of a membrane according to the present invention magnified 5,000 times illustrating the sharp boundary between the skin (top) having a thickness of about 10 millimicrons and the substructure;

Figure 7 is a simulated model of the nucleation and growth structure of membranes according to the present invention.

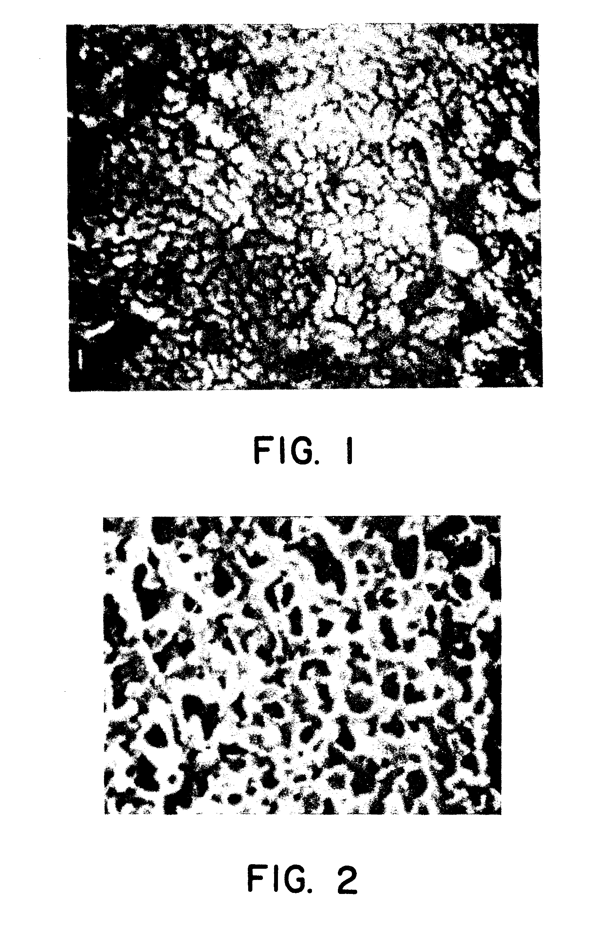

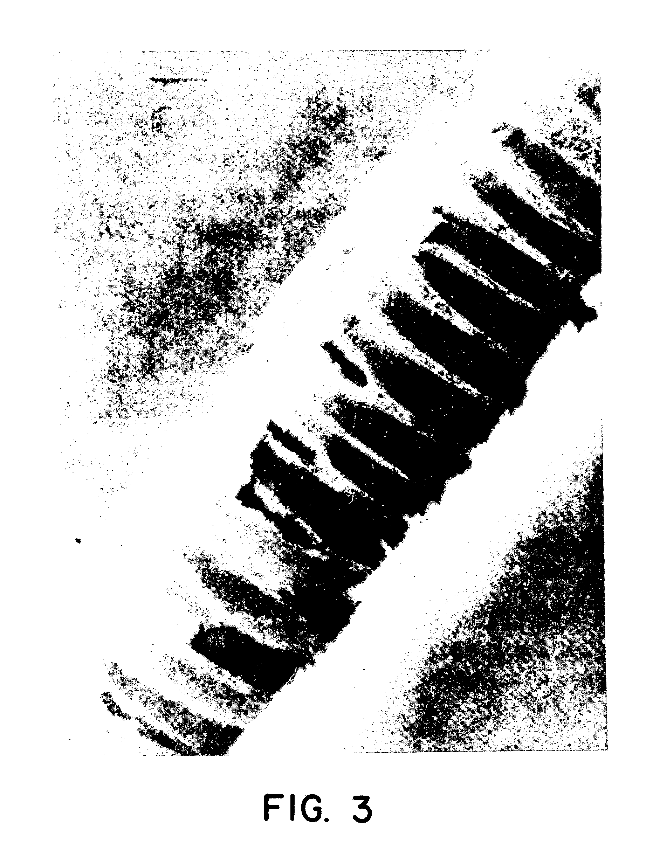

Figures 1, 4, 5 and 6 relate to the membrane produced according to Example II; and Figure 3 relates to the membrane produced according to Example III, as will be described in more detail hereinafter.

5

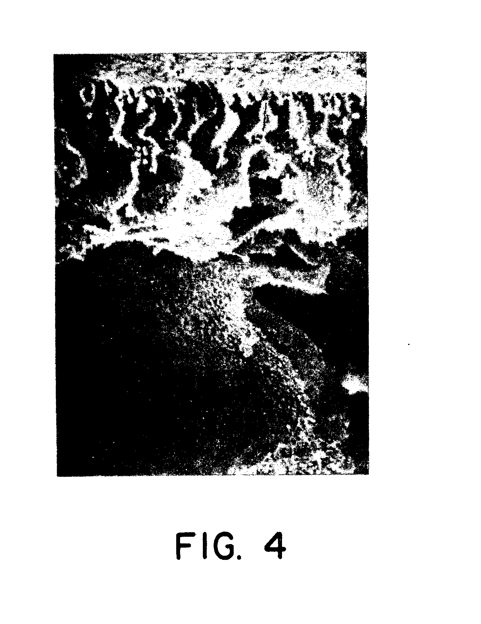

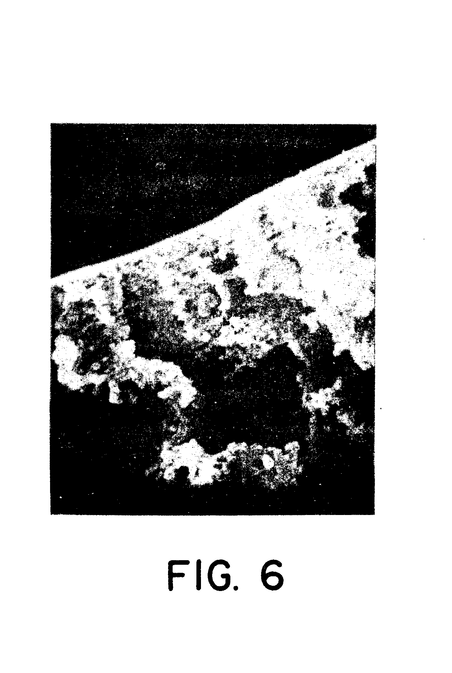

The membranes according to the present invention have very high water permeabilities combined with excellent retention properties as ultrafilters, i.e., these membranes are capable of retaining proteins, viruses and the like. This combination of properties is related to a novel structure which comprises an extremely thin skin (see Figure 6) and a tubular or honeycombed supporting structure (see Figures 3 and 4) forming the majority of the membrane. Because of its uniform pore size, the skin offers excellent retention properties, and because it is very thin, the skin offers little resistance to liquid flow. The open honeycomb structure of the remainder of the membrane provides open passageways for the water as well as support for the skin.

The skin of the membranes of the present invention do not have the substantially circular pores characteristic of prior art membranes (compare Figures 1 and 2). Instead, the surface is formed by irregularly shaped approximately isometric compact areas, which are approximately millimicrons in size. These irregularly shaped areas are closely packed together leaving slit-like fissures or elongated channels between them, these slit-like fissures being apparently interconnected forming an irregular network.

Although we do not wish to be bound by any particular theory, it is believed that these compact areas may be individual polymer molecules or aggregates of a few of them and that the fissures between them represent the pores through which the liquid passes. An SEM photograph (magnified 100,000 times) of the surface skin of a membrane of the present invention is shown in Figure 1 and a similar photograph of the skin of a conventional membrane is shown in Figure 2 to illustrate this structural difference.

The supporting part of the membrane appears in cross-section as large regular columns substantially normal to the skin. This supporting structure is illustrated in Figure 3 which shows a cross-section of the membrane of the present invention with a regular tubular structure with a tube diameter of about 10 millimicrons extending throughout the cross-section from the bottom of the membrane to near the skin. These channels may become larger away from the skin either as the columns become thinner or, more frequently, as the number of columns become smaller. In this connection see Figure 4 which shows a membrane according to the present invention in cross-section illustrating the periodic increase in tubular hollow columns from the skin to the bottom of the membrane. Four periods in column channels are apparent in Figure 4.

When the channels become larger away from the skin as the number of columns become smaller, some of the columns terminate at a certain distance from the skin and others continue. The distance from the skin at which these terminations occur is quite uniform along the membrane and the termination (i.e. the end of a period) may be repeated several times so that a periodic structure may be formed (see Figure 4). The number of levels at which some columns terminate tends to increase as the casting solution becomes more dilute.

Between the skin and the columnar region there may be a very thin layer which is difficult to examine microscopically and which may be granular in structure but the columnar structure extends over generally at least 90, typically at least 95, and preferably at least 98% of the membrane thickness and over substantially all the membrane width and depth as illustrated in Figure 3.

The columns described above appear on membrane cross-sections when examined microscopically. As this is a two-dimensional view, it is clear that these columns are cross-sectional views of tubular structures extending essentially normally to the membrane surface and increasing in diameter away from the skin (see Figure 4). These tubes are closely and regularly packed so that a cross-section parallel to the skin shows close packed polygons, mainly hexagons with occasional pentagons or heptagons. Thus the novel structure of the membranes of this invention may be considered as honeycombed either as a single honeycomb whose wall thickness decreases away from the skin and/or as a series of honeycombs of gradually increasing mesh size away from the skin.

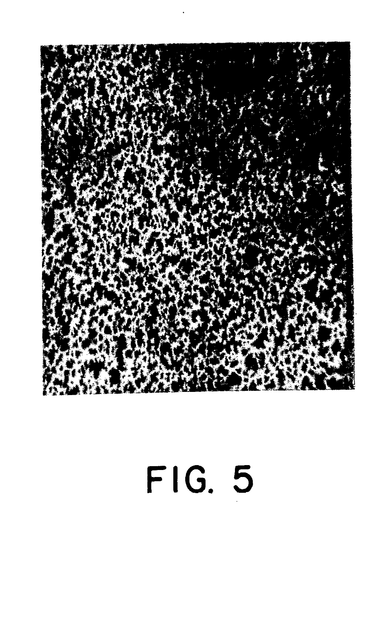

The bottom of the membrane, i.e., the face opposite the skin, generally comprises a highly porous very thin layer of fibres. Figure 5, an SEM photograph of the bottom surface of a membrane of the present invention (magnified 2,000 times), shows the fibrillar network structure of the bottom layer. These fibres are formed under very different conditions from the bulk of the membrane because of the presence of the support (such as glass or steel or appropriate textile or paper material) upon which the membrane is cast.

One particular advantage of the membranes according to the invention is that the skin is well supported by the fine structure near it (see Figure 6) but the flow of filtrate suffers minimum impediment because the channels enlarge rapidly and especially because they are straight and unobstructed except by the porous bottom layer which offers very little resistance.

Again, although we do not wish to be bound by any particular theory, the honeycomb structure of the membranes of the present invention is believed to result from the local interaction on the one hand of supersaturation produced by diffusion of the quenching fluid into the polymer solution and, on the other hand, from the depletion of polymer by its diffusion and precipitation on previously precipitated polymer acting as a nucleus. When the two processes occur at the proper rates and the supersaturation progresses as a front parallel to the membrane surface, the columnar structure may be formed.

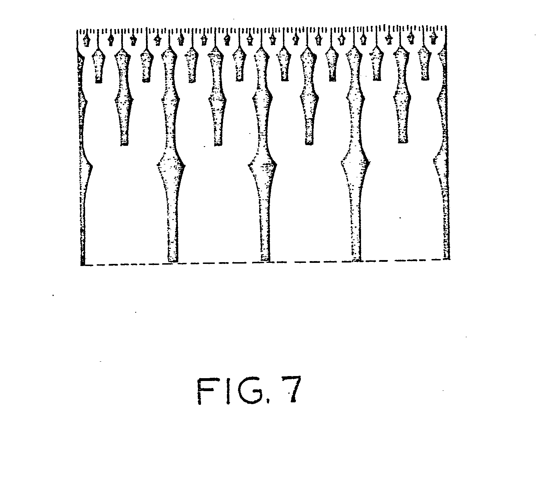

Column formation is believed to take place by the following mechanism. When the casting dope is first contacted with the quench liquid, the polymer is precipitated as a thin skin through which diffusion of the solvent and quench liquid must take place. This diffusion is initially very rapid as the concentration gradient is very high and then becomes gradually slower as the region of concentration gradient expands. Thus the system becomes supersaturated in polymer first near the skin and then gradually further and further away

6

from it. Supersaturation causes the formation of a large number of nuclei and their growth which depletes the polymer in the surrounding solution, thus relieving the supersaturation and inhibiting further growth. This process occurs progressively at successive layers from the skin to the other face of the membrane. This proposed mechanism would result in "nucleation and growth" of the model structure illustrated in Figure 7.

Precipitation and relieving of the supersaturation require diffusion of the polymer toward the site of precipitation. This diffusion occurs at approximately a constant rate whether close to the skin or away from it. As the solution becomes more rapidly supersaturated near the skin, the distance over which it may be relieved by diffusion is small and growth occurs at closely spaced points. Further away from the skin, solubility decreases more slowly because of diffusion of quench liquid over greater distances in relieving the resulting supersaturation and growth occurs at more widely spaced centres.

Thus, some of the tubes become starved in polymer and cease to grow whereas others continue and are then fed by a larger volume of the solution. As the mutual diffusion of solvent and quench liquid becomes slower with time and distance from the skin, the number of growing tubes becomes smaller.

The fact that solubility decreases progressively further away from the skin as time passes means that supersaturation tends to occur always in the region just beyond the already precipitated polymer and thus tends to extend the growth in the direction away from the skin. Thus growth occurs so as to increase the length of the tubes and not to increase their width or diameter. Uniformity of growth is conditioned by the uniformity of the skin.

The thickness of the membrane as cast is some four to five times greater than that of the membranes after quenching. Thus, diffusion of solvent across the skin and into the quench liquid must proceed faster than that of quench liquid in the opposite direction. The porosity of the membrane is, however, greater away from the skin than near it. This suggests that the difference in diffusion rates is larger at the beginning than towards the end of the precipitation process. Thus, the polymer becomes precipitated from a more concentrated solution—one from which more solvent has diffused out—in the early stages near the skin, than later near the other face of the membrane.

In order to obtain the compact structure of the membrane of the present invention it appears that nucleation, i.e., the spontaneous beginning of new precipitation, must be relatively limited. Otherwise the polymer away from the growing tip of the tube would be expected to precipitate at its original location instead of diffusing to the tip before precipitating. Furthermore, it seems that this nucleation is inhibited more in more concentrated polymer solutions so that these tend to form larger tubes and fewer terminations of growth than more dilute solutions. Polymer solutions above a certain concentration, however, no longer produce honeycomb structures but produce instead conventional granular or reticulated structures.

The desirable properties of the membranes of this invention depend upon the rigidity of the polymer as soon as it is precipitated. In particular, the persistence of the very narrow elongated pores between tiny globules of polymer require that these pores do not tend to coalesce or fuse. The skin should also provide a highly uniform barrier (see Figures 2 and 6) to the rapid mixing of solvent and quench liquid, allowing only regular and uniform diffusion required for the formation of honeycomb structures. The fact that these structures are observed only with polymers having relatively very high glass transition temperatures (greater than 200°C) is believed to be related to the rigidity of the polymer as precipitated. Presumably, even though the polymer is necessarily somewhat swollen by and plasticized by the residual solvent in it, its glass transition temperature is not lowered sufficiently to destroy the desirable role of the skin during quenching. If the glass transition temperature of the polymer is too low, this effect is lost and membranes according to the invention are not produced. Alternatively, because of the high glass transition temperatures of the polymers used in producing the membranes of the present invention, precipitation proceeds directly to a solid or glass without going through a gel state as happens with polymers having lower glass transition temperatures.

In order that the present invention may be more fully understood, the following Examples, in which all parts and percentages are by weight unless indicated to the contrary, are given by way of illustration only.

Example I

Ciba-Geigy XU 218 polyimide (having a glass transition temperature between 320° and 330°C) was dissolved in dimethylformamide to form a 7% polymer solution, the solution being cast onto a glass plate to a uniform wet thickness of 500 μm by means of a doctor blade at a constant withdrawal rate of 9.1 metre/minute. The wet film was drawn immediately into a water bath at room temperature. Within a few seconds after immersion a pale yellow opaque film formed which was allowed to remain in the bath for an additional two minutes.

The thus-formed membrane had a thickness of 170 microns, a water permeability of 2 cm/min at one psi (6.9 kPa) and a nominal molecular weight cut-off of 25,000 for globular solutes (i.e. proteins). The membrane had a tensile strength of $2.6 \times 10^3$ kPa. Examination under an optical microscope at a magnification of 100 indicated that the cross-section of this membrane had an open honeycomb structure of regular columns having a diameter of from 3 to 5 μm.

Example II

The polyimide of Example I was dissolved in a mixture of 50% meta-cresol and 50% chloroform to obtain a final solid content of 4.5% by weight polymer. A membrane was prepared from this solution as in Example I except that isopropyl alcohol was used in the coagulating bath in place of water. After one minute residence time in the alcohol bath, the membrane was stripped from the glass plate and stored in alcohol.

The water permeability of the membrane was 5 cm/min at one psi (6.9 kPa), its tensile strength was $1.3 \times 10^3$ kPa, and it had a molecular weight cut-off of about 100,000. The SEM of the surface skin (magnified 100,000 times) of this membrane is shown in Figure 1, a cross-section of this membrane, magnified 1,000 times, is shown in Figure 4, and the bottom surface of this membrane, magnified 2,000 times, is shown in Figure 5.

Figure 4 illustrates the periodic increase in tubular hollow columns from the skin to the bottom of the membrane thickness. Figure 6 is an SEM of a cross-section of this membrane, magnified 5,000 times, illustrating the sharp boundary between the skin (top), having a thickness of about 10 millimicrons, and the substructure. This membrane retained 99.8% immunoglobulin G (which has a molecular weight of 160,000).

Example III

Polyvinyl carbazole (which is commercially available from the Aldrich Chemical Co.), having a glass transition temperature of 200°C, was dissolved in a mixture of 50% meta-cresol and 50% chloroform to form a 6% by weight polymer solution. This solution was then cast as in Example I but using an ethanol bath to form a membrane which had a water permeability of 2 cm/min at one psi (6.9 kPa), a molecular weight cut-off of 50,000, and a tensile strength of $1.7 \times 10^3$ kPa. Figure 3 is an SEM of a cross-section of this membrane magnified 1,000 times illustrating the tubular structure of the support of this membrane.

Example IV

A 10% solution of Upjohn 2080 polyimide, having a glass transition temperature of 250°C, was dissolved in a mixture of 70% chloroform and 30% cresylic acid. This solution was cast onto a glass plate to a thickness of 300 microns, and allowed to remain in the air for 30 seconds. It was then immersed into an alcohol bath at ambient temperature. The film completely coagulated within 30 seconds; it was then stripped off the glass plate and stored in alcohol.

The membrane produced by this process had a water permeability of 0.5 cm/min at one psi (6.9 kPa), a molecular weight cut-off of 10,000, and a tensile strength of $4.1 \times 10^3$ kPa. Examination under an optical microscope showed that it had a cross-section consisting of a honeycomb structure with regular columns.

Example V

Poly(2,2'-octamethylene-5,5'-dibenzimidazole) was prepared according to the method disclosed at pages 103 and 104 of the 1968 edition of Polymer Chemistry (Interscience Publishers). This polymer had a polymer melt temperature (which is, within experimental error, approximately equal to the glass transition temperature) of 250°C. The polymer was dissolved in a mixture of 50% metal-cresol and 50% chloroform to form a 3% by weight polymer solution. This solution was cast to form a membrane according to the procedure of Example II.

The membrane had a water permeability of 8 cm/min at one psi (6.9 kPa), completely retained the solute Dextran blue 2000, and had a molecular weight cut-off of $2 \times 10^6$. Examination of cross-sections of this membrane under an optical microscope show a honeycomb structure of regular columns.

Comparative Examples

Table II illustrates the differences in water permeability (in cm/min at one psi (6.9 kPa)) between ultrafilters of the prior art and those of the present invention.

TABLE II

| Molecular weight cut-off | Millipore ultrafilter | Amicon ultrafilter | Ultrafilter of this invention |
|---|---|---|---|
| $10^6$ | PSVP 0.03 | — | 5—8 |
| $10^5$ | PTHK 0.10 | 0.10 | 2—3 |
| $10^4$ | PTGC 0.02 | 0.02 | 0.2—0.5 |

An advantage of the membranes of the present invention is that their water permeability is not so drastically reduced by the presence of retained particles (solutes) as that of prior art membranes. Thus, a 25,000 molecular weight cut-off membrane such as that described in the above Example I has its water permeability reduced by a factor of only five (i.e. from about 2 cm/min at one psi (6.9 kPa) to about 0.4 cm/min at one psi (6.9 kPa) during filtration of a 0.1% solution of α-chymotrypsinogen. Presently

commercially available membranes, on the other hand, not only have a lower initial filtration rate but this initial filtration rate is reduced by an order of magnitude during filtration.

This difference is believed due to the elongated shape of the pores of the membranes of the present invention. These pores are less completely obstructed by retained spherical particles than the circular pores of prior art membranes.

In this connection, one may compare Figures 1 and 2 which are SEMs of the surface skin of a membrane of the present invention (Figure 1) and a membrane of the prior art (Figure 2) at the same magnification. Figure 1 illustrates that the skin of the membranes of the present invention has interconnecting channels or pores which are about 5 millimicrons in width and about 10 to 50 mμm in length with domain structure of polymer molecules in between. Figure 2 illustrates that the skin of the membranes of the prior art has substantially circular pore structure with a wide distribution of pore size ranging from about 10 to 50 mμm in diameter.

Moreover, the membranes of the present invention are advantageous due to the sharpness of their molecular weight cut-off. Thus, the membrane prepared according to the above Example I rejects only 10% of ribonuclease (having a molecular weight of 17,000) but rejects 98% of α-chymotrypsinogen (having a molecular weight of 22,000). This sharpness of molecular weight cut-off is believed to be related to the uniformity of the pore sizes formed in the skin of these membranes.

The membranes of this invention may be used with either the skin side or the support side of the membrane upstream with respect to fluid flow. For the filtration of certain "dirty" solutions, such as blood plasma, it is preferred to use these membranes so that the support is upstream. In this way, the support serves as a built-in prefilter, greatly increasing the dirt-holding capacity of the membrane. The fluid encounters the larger channels first and later encounters channels having gradually decreasing size with the very small pores—those in the skin—being encountered last. Hence larger particles are retained before they reach the skin and do not clog its pores. An in-depth filtration is obtained in which the particles are retained at various levels leaving many more channels and pores available for flow than if they were all retained in one plane at the skin. If the membrane is not highly asymmetrical this advantage does not occur since approximately the same amount of retained matter fouls both sides of the membrane because the pore sizes on both sides would be approximately the same.

## Claims

1. An asymmetric ultrafiltration membrane having a water permeability of at least 0.2 cm/min at one psi (6.9 kPa), the membrane comprising an open honeycomb structure constituting the majority of the membrane and, integral therewith, a skin, the open honeycomb structure and the skin both being of a polymeric material having a glass transition temperature of at least 200°C, said polymeric material not being a polyquinoxaline, a polyquinoline, a poly-as-triazine, a polypyrazinoquinoxaline or a polyanthrazoline.

2. A membrane according to claim 1, wherein the polymeric material has a modulus of elasticity of at least $6.9 \times 10^5$ kPa.

3. A membrane according to claim 2, wherein the ratio of the water permeability of the membrane to the square root of the molecular weight cut-off of the polymeric material is greater than $2 \times 10^{-3}$ cm/min at one psi (6.9 kPa).

4. A membrane according to any of claims 1 to 3, wherein the polymeric material is a polyimide.

5. A membrane according to any of claims 1 to 4, wherein the water permeability is at least 0.4 cm/min at one psi (6.9 kPa).

6. A membrane according to any of claims 1 to 5, wherein the honeycomb structure has a wall thickness which decreases as the distance from the skin increases and/or a mesh which increases as the distance from the skin increases.

7. A method of producing a membrane according to claim 1, which comprises casting a solution containing not more than 13% by weight of the polymeric material into a quench liquid which is a non-solvent for the polymeric material but miscible with the solvent.

8. A method according to claim 7, wherein the solution contains not more than 10% of the polymeric material.

9. A method according to claim 8, wherein the solution contains 3 to 7% of the polymeric material.

10. A method according to any of claims 7 to 9, wherein the polymeric material is as defined in either of claims 2 and 4.

11. A method according to any of claims 7 to 10, wherein the solvent is one or more of dimethylformamide, meta-cresol, cresylic acid and chloroform.

12. A method according to any of claims 7 to 11, wherein the quench liquid is water.

## Patentansprüche

1. Asymmetrische Ultrafiltrationsmembran mit einer Wasserdurchlässigkeit von wenigstens 0,2 cm/min bei 1 psi (6,9 kPa), wobei die Membran eine offene Wabenstruktur, die die Majorität bzw. den größeren Teil der Membran bildet, und integrierend damit eine Haut umfaßt, worin die offene

**0 037 730**

Wabenstruktur und die Haut beide aus einem Polymermaterial mit einer Glasumwandlungstemperatur von wenigstens 200°C sind und das Polymermaterial kein Polychinoxalin, Polychinolin, Poly-as-triazin, Polypyrazinochinoxalin oder Polyanthrazolin ist.

2. Membran nach Anspruch 1, worin das Polymermaterial einen Elastizitätsmodul von wenigstens $6,9 \cdot 10^5$ kPa besitzt.

3. Membran nach Anspruch 2, worin das Verhältnis der Wasserdurchlässigkeit der Membran zu der Quadratwurzel der Molekulargewichtsgrenze des Polymermaterials größer als $2 \cdot 10^{-3}$ cm/min bei 1 psi (6,9 kPa) ist.

4. Membran nach einem der Ansprüche 1 bis 3, worin das Polymermaterial ein Polyimid ist.

5. Membran nach einem der Ansprüche 1 bis 4, worin die Wasserdurchlässigkeit wenigstens 0,4 cm/min bei 1 psi (6,9 kPa) ist.

6. Membran nach einem der Ansprüche 1 bis 5, worin die Wabenstruktur eine Wandstärke, die mit der Zunahme der Entfernung von der Haut abnimmt, und/oder ein Geflecht bzw. eine Masche, die mit der Zunahme der Entfernung von der Haut zunimmt, hat.

7. Verfahren zur Herstellung einer Membran nach Anspruch 1, welches das Gießen einer Lösung, enthaltend nicht mehr als 13 Gew.-% des Polymermaterials, in eine Abschreckflüssigkeit, welche kein Lösungsmittel für das Polymermaterial ist, aber mit dem Lösungsmittel mischbar ist, umfaßt.

8. Verfahren nach Anspruch 7, worin die Lösung nicht mehr als 10% des Polymermaterials enthält.

9. Verfahren nach Anspruch 8, worin die Lösung 3 bis 7% des Polymermaterials enthält.

10. Verfahren nach einem der Ansprüche 7 bis 9, worin das Polymermaterial wie in Anspruch 2 oder 4 definiert ist.

11. Verfahren nach einem der Ansprüche 7 bis 10, worin das Lösungsmittel aus Dimethylformamid, Meta-Kresol, Kresylsäure und Chloroform oder Mischungen davon ist.

12. Verfahren nach einem der Ansprüche 7 bis 11, worin die Abschreckflüssigkeit Wasser ist.

**Revendications**

1. Une membrane assymétrique d'ultrafiltration ayant une perméabilité à l'eau d'au moins 0,2 cm/min sous 1 psi (6,9 kPa), la membrane comprenant une structure ouverte en nid d'abeilles constituant la majorité de la membrane et, faisant partie intégrante de celle-ci, une peau, la structure ouverte en nid d'abeilles et la peau étant toutes deux faites d'une matière polymère et ayant une température de transition vitreuse d'au moins 200°C, ladite matière polymère n'étant pas une polyquinoxaline, une polyquinoléine, une poly-as-triazine, une polypyrazinoquinoxaline ou une polyanthrazoline.

2. Une membrane selon la revendication 1 dans laquelle la matière polymère a un module d'élasticité d'au moins $6,9 \times 10^5$ kPa.

3. Une membrane selon la revendication 2 dans laquelle le rapport de la perméabilité à l'eau de la membrane à la racine carrée du poids moléculaire d'arrêt de la matière polymère est supérieur à $2 \times 10^{-3}$ cm/min à 1 psi (6,9 kPa).

4. Une membrane selon l'une quelconque des revendications 1 à 3, dans laquelle la matière polymère est un polyimide.

5. Une membrane selon l'une quelconque des revendications 1 à 4 dont la perméabilité à l'eau est d'au moins 0,4 cm/min à 1 psi (6,9 kPa).

6. Une membrane selon l'une quelconque des revendications 1 à 5, dans laquelle la structure en nid d'abeilles a une épaisseur de la paroi qui diminue lorsque la distance à la peau s'accroît et/ou une maille qui s'accroît lorsque la distance de la peau augmente.

7. Un procédé de préparation d'une membrane selon la revendication 1 qui comprend la coulée d'une solution ne contenant pas plus de 13% en poids de la matière polymère dans un liquide de trempe qui est un non-solvant de la matière polymère mais qui est miscible au solvant.

8. Un procédé selon la revendication 7, dans lequel la solution ne contient pas plus de 10% de la matière polymère.

9. Un procédé selon la revendication 8, dans lequel la solution contient 3 à 7% de la matière polymère.

10. Un procédé selon l'une quelconque des revendications 7 à 9 dans lequel la matière polymère est comme défini dans l'une ou l'autre des revendications 2 et 4.

11. Un procédé selon l'une quelconque des revendications 7 à 10, dans lequel le solvant est un ou plusieurs parmi le diméthylformamide, le métacrésol, l'acide crésylique et le chloroforme.

12. Un procédé selon l'une quelconque des revendications 7 à 11, dans lequel le liquide de trempe est l'eau.

FIG. 1

FIG. 2

FIG. 3

0 037 730

FIG. 4

3

FIG. 5

FIG. 6

FIG. 7